# EUROPÄISCHE PATENTANMELDUNG

(11) **EP 4 541 780 A1**
(43) Veröffentlichungstag der Anmeldung: **23.04.2025**
(21) Anmeldenummer: 16180504.9
(22) Anmeldetag: 21.07.2016
(51) Int. Cl.: C03C 21/00, B65G 49/06

(54) **VORRICHTUNG UND VERFAHREN ZUM CHEMISCHEN VORSPANNEN EINER GROSSFLÄCHIGEN, DÜNNEN GLASSCHEIBE**

(71) Anmelder: SFL Technologies GmbH, 8152 Stallhofen (AT)
(72) Erfinder: Höllwart, Johann, 8042 Graz (AT); Siegfried, Maierhofer, 8641 St. Marein im Mürztal (AT); Müller, Mario J., 8047 Kainbach bei Graz (AT)
(74) Vertreter: Wirnsberger, Gernot

(57) **Zusammenfassung**

Die Erfindung betrifft eine Vorrichtung (1) zum chemischen Vorspannen einer großflächigen, dünnen Glasscheibe (2), umfassend ein Becken (3) und ein Salzbad (4), wobei das Becken (3) mit dem Salzbad (4) befüllt ist und die Glasscheibe (2) zum Vorspannen in das Becken (3) einführbar ist, wobei eine Aufhängung (5) für die Glasscheibe (2) vorgesehen ist, um die Glasscheibe (2) zum Vorspannen im Becken (3) hängend zu lagern.

Des Weiteren betrifft die Erfindung ein Verfahren zum chemischen Vorspannen einer großflächigen, dünnen Glasscheibe (2) in einem mit einem Salzbad (4) befüllten Becken (3), wobei die Glasscheibe (2) zum Vorspannen in das Becken (3) eingeführt wird, wobei die Glasscheibe (2) über eine Aufhängung (5) zum Vorspannen hängend im Becken (3) gelagert wird.

Weiter betrifft die Erfindung eine chemisch vorgespannte Glasscheibe (2).

## Beschreibung

Die Erfindung betrifft eine Vorrichtung zum chemischen Vorspannen einer großflächigen, dünnen Glasscheibe, umfassend ein großvolumiges Becken und ein Salzbad, wobei das Becken mit dem Salzbad befüllt ist und die Glasscheibe zum Vorspannen in das Becken einführbar ist.

Des Weiteren betrifft die Erfindung ein Verfahren zum chemischen Vorspannen einer großflächigen, dünnen Glasscheibe in einem mit einem Salzbad befüllten Becken, wobei die Glasscheibe zum Vorspannen in das Becken eingeführt wird.

Weiter betrifft die Erfindung eine chemisch vorgespannte Glasscheibe.

Vorrichtungen und Verfahren zum Härten bzw. Vorspannen einer Glasscheibe, wie beispielsweise Einscheibenglas, sind aus dem Stand der Technik bekannt. Um aus einem Einscheibenglas ein Einscheiben-Sicherheitsglas herzustellen, wird dieses thermisch gehärtet. Bei einem solchen Verfahren zum thermischen Härten von Einscheibenglas wird das Einscheibenglas auf eine bestimmte Temperatur erhitzt, wonach dieses schlagartig abgekühlt wird. Durch das Erhitzen und anschließende schockartige Abkühlen des Einscheibenglases kühlen Bereiche an einer Oberfläche des Einscheibenglases schneller ab als innere Bereiche desselben, weshalb im Einscheibenglas unterschiedliche Spannungen entstehen. Konkret tritt dadurch an der Oberfläche eine Druckspannung und in den inneren Bereichen eine Zugspannung auf, wodurch Festigkeiten des Einscheibenglases erhöht werden. Ein Einscheiben-Sicherheitsglas ist hergestellt. Ein solches Verfahren bzw. eine entsprechende Vorrichtung eignet sich grundsätzlich zum Härten von unterschiedlichen Gläsern, wie auch beispielsweise großflächige Glasscheiben. Nachteilig dabei ist jedoch, dass thermisch gehärtete Glasscheiben nach dem Härten nicht mehr genügend bearbeitet werden können. Insbesondere können thermisch gehärtete Glasscheiben nicht oder nur schwer geschnitten oder geschliffen werden, da eine solche Bearbeitung aufgrund der Zugspannungen in den inneren Bereichen der Glasscheibe zu einem Bruch der Glasscheibe führt.

Des Weiteren ist es bekannt, Glas chemisch vorzuspannen bzw. zu härten. Dabei wird Glas auf Trägern durch eine sogenannte Salzwanne geführt. Dabei ist es notwendig, dass das Glas stets entspannt ist, um das Glas durchgehend über dessen gesamte Fläche zu härten. Bekannte Vorrichtungen zum chemischen Vorspannen von Glas umfassen üblicherweise einen Korb, in welchen das zu härtende Glas gestellt wird. Eine solche Vorrichtung eignet sich ohne Weiteres zum chemischen Vorspannen bzw. Härten von relativ kleinen Flachgläsern wie als Glasscheibe für ein Mobiltelefon. Um eine großflächige, dünne Glasscheibe chemisch zu härten, ist diese Vorrichtung jedoch weder ausgebildet noch geeignet.

Hier setzt die Erfindung an. Aufgabe der Erfindung ist es, eine Vorrichtung der eingangs genannten Art anzugeben, mit welcher es möglich ist, eine großflächige, dünne Glasscheibe chemisch vorzuspannen.

Des Weiteren ist es ein Ziel der Erfindung, ein Verfahren der eingangs genannten Art anzugeben, mit welchem eine großflächige, dünne Glasscheibe chemisch vorgespannt werden kann.

Weiter ist es ein Ziel der Erfindung, eine chemisch vorgespannte Glasscheibe bereitzustellen.

Die Aufgabe wird erfindungsgemäß dadurch gelöst, dass bei einer Vorrichtung der eingangs genannten Art eine Aufhängung für die Glasscheibe vorgesehen ist, um die Glasscheibe zum Vorspannen im Becken hängend zu lagern.

Ein mit der Erfindung erzielter Vorteil ist insbesondere darin zu sehen, dass die Aufhängung ein entspanntes Einbringen der Glasscheibe in das Becken ermöglicht, wobei die Glasscheibe während des Verfahrens der chemischen Härtung bzw. chemischen Vorspannung spannungsfrei an der Aufhängung im Becken gelagert verweilt. Es sind somit großflächig ausgebildete Glasscheiben chemisch härtbar bzw. vorspannbar. Beim chemischen Härten bzw. Vorspannen sind Oberflächendruckspannungen in der Glasscheibe erzeugbar. Bei der Glasscheibe handelt es sich insbesondere um Silikatglas. Chemisch gehärtete Glasscheiben sind nach der Härtung weiter bearbeitbar, beispielsweise schneidbar, schleifbar und verpressbar. Dadurch erweitert sich ein Einsatzbereich einer gehärteten Glasscheibe. Die chemisch gehärtete Glasscheibe kann beispielsweise im Flugzeugbau, Jachtbau, Fahrzeugbau und/oder Bauwesen eingesetzt werden. Insbesondere ist die Glasscheibe so weiterverarbeitbar, dass diese als Sicherheitsglas, Explosionsschutzglas oder eine Kombination eines Sicherheitsglases und eines Explosionsschutzglases verwendbar ist.

Mit der erfindungsgemäßen Vorrichtung ist insbesondere eine dünne Glasscheibe härtbar, welche eine Dicke von weniger als 3 mm, insbesondere weniger als 2 mm, besonders bevorzugt weniger als 1,8 mm, aufweist. Ferner kann eine zu härtende Glasscheibe eine große Fläche von zumindest etwa 0,5 m mal 0,5 m, bevorzugt etwa 4 m mal 2,5 m, besonders bevorzugt etwa 4,5 m mal 2,8 m, insbesondere etwa 5 m mal 3 m oder mehr, aufweisen. Üblicherweise ist die Glasscheibe mit einer Fläche von bis zu 6 m mal 3,21 m ausgebildet. Das Becken weist der zu härtenden Glasscheibe entsprechende Abmessungen auf und ist dementsprechend großvolumig ausgebildet und nimmt das Salzbad darin auf. Das Salzbad wird im Becken erwärmt, beispielsweise auf eine Temperatur zwischen etwa 400 °C und 500 °C, insbesondere zwischen etwa 420 °C und 480 °C, besonders bevorzugt zwischen etwa 440 °C und 460 °C. Hierfür ist zumindest eine Heizeinrichtung vorgesehen, welche das gesamte Salzbad gleichmäßig auf eine erhöhte Temperatur bringt. Eine mit der erfindungsgemäßen Vorrichtung hergestellte bzw. chemisch gehärtete Glasscheibe ist mit einem Druck von mindestens 150 MPa, bevorzugt mit einem Druck von mehr als 500 MPa, insbesondere mehr als 550 MPa, besonders bevorzugt mehr als 600 MPa, belastbar, bevor diese bricht. Eine Festigkeit der chemisch gehärteten Glasscheibe ist von einer Verweildauer der Glasscheibe im mit dem Salzbad befüllten Becken. Die Aufhängung ist so ausgebildet, dass die Glasscheibe mit dieser hängend und senkrecht ausgerichtet in dem im Becken angeordneten Salzbad lagerbar ist, wobei die Glasscheibe spannungsfrei und insbesondere unter deutlicher Reduktion einer Schwerkraftwirkung im Becken verweilt. Um eine Reduktion einer Schwerkraftwirkung auf die Glasscheibe im Salzbad zu ermöglichen, weist dieses insbesondere eine Dichte auf, welche an eine Dichte der Glasscheibe angepasst ist, wodurch die Schwerkraftwirkung durch Auftrieb reduziert ist.

Die erfindungsgemäße Vorrichtung erlaubt weiter ein chemisches Vorspannen von gekrümmten Glasscheiben. In der Vorrichtung sind durch die Aufhängung bzw. die hängende Lagerung der Glasscheibe im Becken unterschiedlich gekrümmte Glasscheiben härtbar, beispielsweise eine eindimensional gekrümmte, zweidimensional gekrümmte oder frei geformte Glasscheibe.

Es ist günstig, wenn die Aufhängung als Rechen ausgebildet ist, wobei der Rechen in Löcher der Glasscheibe einführbar ist. Die Löcher werden vor dem Härten in die Glasscheibe eingebracht. Der Rechen ist so ausgebildet, dass dieser in Löcher der Glasscheibe einführbar ist, um die Glasscheibe zum Härten in das Becken einzutauchen. Soll eine gehärtete Glasscheibe ohne Löcher hergestellt werden, ist der Bereich mit den Löchern nach dem Härten abschneidbar, da eine chemisch gehärtete Glasscheibe nach dem Härten weiterbearbeitbar ist. Eine Anzahl von Zinken oder Haken des Rechens entspricht mit Vorteil den Löchern in der Glasscheibe, welche zweckmäßigerweise mit äquidistanten Abständen zueinander angeordnet und über eine gesamte Seite der Glasscheibe verteilt sind.

Alternativ kann es auch günstig sein, wenn die Aufhängung als Klemmeinrichtung ausgebildet ist. Die Klemmeinrichtung ist hierbei zum Einklemmen der zu bearbeitenden Glasscheibe ausgebildet. Die Glasscheibe ist über die Klemmeinrichtung entspannt oder elastisch aufgehängt in das Becken mit dem Salzbad hängbar. Da im Bereich der Klemmeinrichtung die Glasscheibe nicht chemisch härtbar ist, ist es zweckmäßig, wenn dieser Bereich der Glasscheibe nach dem Härten abgeschnitten wird, um eine homogen gehärtete Glasscheibe herzustellen. Unabhängig davon, wie die Aufhängung ausgebildet ist, ist es zweckmäßig, wenn diese aus einem chemisch beständigen Material ausgebildet ist, da die Aufhängung beim Härten der Glasscheibe zumindest teilweise in das Salzbad eintaucht. Die Aufhängung ist beispielsweise aus einem chemisch beständigen Kunststoff gebildet.

Es ist von Vorteil, wenn eine Dichte des Salzbades an eine Dichte der Glasscheibe angepasst ist, wobei das Salzbad überwiegend Kaliumnitrat umfasst. Beispielsweise entspricht die Dichte des Salzbades etwa einer Dichte der zu härtenden Glasscheibe, wodurch die Glasscheibe annähernd schwebend im Salzbad lagerbar und effektiv homogen über eine gesamte Fläche chemisch härtbar ist. Insbesondere sind dadurch auch großflächige Flachgläser chemisch härtbar, welche nach dem Härten weiterbearbeitbar sind. Das Salzbad ist vorteilhaft als hochreines Kaliumnitrat ausgebildet. Beim chemischen Härten finden Ionenaustauschvorgänge an einer Oberfläche der Glasscheibe statt, wobei beispielsweise kleine Natriumionen mit größeren Kaliumionen ausgetauscht werden. Dadurch wird die Glasscheibe chemisch vorgespannt bzw. gehärtet. Beispielsweise weist die Glasscheibe eine Dichte von etwa 2500 kg/m³ und das Salzbad eine Dichte von etwa 2000 kg/m³ auf, wodurch eine Schwerkraftwirkung auf die Glasscheibe im Salzbad durch Auftrieb deutlich reduziert ist.

Zweckmäßig ist es, wenn die Aufhängung elastische Elemente aufweist, um die Glasscheibe im Salzbad annähernd schwebend zu lagern. Dies ist insbesondere bei einer sehr dünn ausgebildeten Glasscheibe zweckmäßig. Eine sehr dünne Glasscheibe mit einer Dicke von 2 mm oder weniger ist insbesondere bei einer großen Fläche desselben elastisch. Um eine solche Glasscheibe gleichmäßig sowie spannungsfrei und verzugsfrei zu härten, ist deshalb eine Aufhängung mit elastischen Elementen wie einer Feder oder dergleichen desselben günstig.

Das weitere Ziel wird erreicht, wenn bei einem Verfahren der eingangs genannten Art die Glasscheibe über eine Aufhängung zum Vorspannen hängend im Becken gelagert wird.

Ein damit erzielter Vorteil ist insbesondere darin zu sehen, dass durch die Aufhängung ein entspanntes Einbringen der Glasscheibe in das Becken ermöglicht wird, wobei die Glasscheibe während des Verfahrens zum chemischen Vorspannen bzw. Härten spannungsfrei und unter deutlicher Reduktion einer Schwerkraftwirkung an der Aufhängung im Becken gelagert wird. Es kann somit eine großflächig und dünn ausgebildete Glasscheibe chemisch gehärtet bzw. vorgespannt werden. Beim chemischen Härten bzw. Vorspannen werden Oberflächendruckspannungen in der Glasscheibe erzeugt, weshalb chemisch gehärtete Glasscheiben nach der Härtung weiter bearbeitet werden können. Bei der Glasscheibe handelt es sich insbesondere um Silikatglas. Eine chemisch gehärtete Glasscheibe kann beispielsweise geschnitten, geschliffen und verpresst werden, wodurch ein Einsatzbereich einer gehärteten Glasscheibe erweitert wird. Die chemisch gehärtete Glasscheibe kann beispielsweise im Flugzeugbau, Jachtbau, Fahrzeugbau und/oder Bauwesen eingesetzt werden. Insbesondere wird die Glasscheibe so weiterverarbeitet, dass diese als Sicherheitsglas, Explosionsschutzglas oder eine Kombination eines Sicherheitsglases und eines Explosionsschutzglases verwendet werden kann.

Mit dem erfindungsgemäßen Verfahren können weiter gekrümmten Glasscheiben chemisch vorgespannt bzw. gehärtet werden. Durch die Aufhängung bzw. die entspannte Lagerung der Glasscheibe im Becken können unterschiedlich gekrümmte Glasscheiben gehärtet werden, beispielsweise eine eindimensional gekrümmte, zweidimensional gekrümmte oder frei geformte Glasscheibe.

Mit dem erfindungsgemäßen Verfahren wird insbesondere eine dünne Glasscheibe mit einer Dicke von weniger als etwa 3 mm, insbesondere weniger als 2 mm, besonders bevorzugt weniger als 1,8 mm, gehärtet. Ferner kann eine zu härtende Glasscheibe eine große Fläche von zumindest etwa 0,5 m mal 0,5 m, bevorzugt etwa 4 m mal 2,5 m, besonders bevorzugt etwa 4,5 m mal 2,8 m, insbesondere etwa 5 m mal 3 m oder mehr, aufweisen. Üblicherweise ist die Glasscheibe mit einer Fläche von bis zu 6 m mal 3,21 m ausgebildet.

Günstig ist es, wenn die Glasscheibe über eine als Rechen ausgebildete Aufhängung in das Becken gehängt wird, wobei der Rechen in Löcher der Glasscheibe eingeführt wird. Die Löcher werden vor dem Härten in die Glasscheibe eingebracht. Der Rechen wird in Löcher der Glasscheibe eingeführt, um die Glasscheibe zum Härten in das Becken einzutauchen. Die Glasscheibe wird besonders bevorzugt annähernd schwebend bzw. elastisch im Salzbad eingetaucht und dort gelagert, um in weiterer Folge eine spannungsfreie und verzugsfreie chemisch gehärtete Glasscheibe herzustellen.

Von Vorteil kann es auch sein, wenn die Glasscheibe über eine als Klemmeinrichtung ausgebildete Aufhängung in das Becken gehängt wird. Die Glasscheibe wird in die Klemmeinrichtung eingeklemmt und mit dieser ins Salzbad gehängt. Insbesondere wird die Glasscheibe wiederum unter Reduktion der Schwerkraftwirkung im Salzbad gelagert, sodass ein Verzug der oder Spannungen in der Glasscheibe vermieden werden.

Vorteilhaft ist es, wenn eine Dichte des Salzbades an eine Dichte der Glasscheibe angepasst wird. Die Dichte des Salzbades entspricht dabei insbesondere etwa der Dichte der Glasscheibe, wobei das Salzbad überwiegend aus Kaliumnitrat gebildet wird. Dadurch wird die Glasscheibe unter Reduktion einer Schwerkraftwirkung im Salzbad gelagert, wodurch diese effektiv homogen über eine gesamte Fläche chemisch gehärtet wird. Beispielsweise wird eine Glasscheibe mit einer Dichte von etwa 2500 kg/m³ in einem Salzbad mit einer Dichte von etwa 2000 kg/m³ chemisch vorgespannt.

Günstig ist es, wenn die Glasscheibe annähernd schwebend im Salzbad gelagert wird. Hierfür ist die Aufhängung mit elastischen Elementen wie Federn oder dergleichen ausgebildet. Besonders bevorzugt wird die Glasscheibe für eine deutliche Reduktion einer Schwerkraftwirkung durch Auftrieb in einem Salzbad gelagert, welches eine annähernd gleiche Dichte aufweist wie die Glasscheibe selbst.

Das weitere Ziel wird erreicht, wenn mit einem solchen Verfahren eine chemisch vorgespannte Glasscheibe hergestellt wird, wobei die Glasscheibe großflächig und dünn ausgebildet ist.

Weitere Merkmale, Vorteile und Wirkungen ergeben sich aus den nachfolgend dargestellten Ausführungsbeispielen. In den Zeichnungen, auf welche Bezug genommen wird, zeigen:
- Fig. 1: eine erfindungsgemäße Vorrichtung;
- Fig. 2: eine als Rechen ausgebildete Aufhängung;
- Fig. 3: eine als Klemmeinrichtung ausgebildete Aufhängung;
- Fig. 4: eine weitere als Klemmeinrichtung ausgebildete Aufhängung.

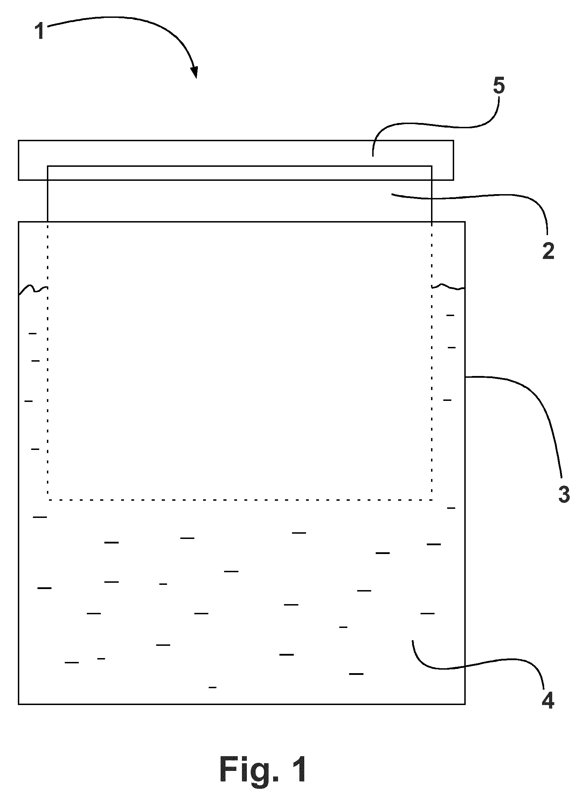

In Fig. 1 ist eine erfindungsgemäße Vorrichtung 1 zum chemischen Härten bzw. Vorspannen einer großflächigen, dünnen Glasscheibe 2 gezeigt. Diese umfasst ein großvolumiges Becken 3, welches mit einem Salzbad 4 befüllt ist. Das Becken 3 weist der zu härtenden Glasscheibe 2 entsprechende Abmessungen auf und ist dementsprechend großvolumig ausgebildet. Die Glasscheibe 2 ist als dünne, großflächige, optional gekrümmte Scheibe ausgebildet und wird zum chemischen Härten hängend in das Becken 3 eingeführt, wo die Glasscheibe 2 für eine zum Härten notwendige Zeitspanne verweilt. Um die Glasscheibe 2 hängend von oben in das Becken 3 einzuführen, ist eine Aufhängung 5 vorgesehen.

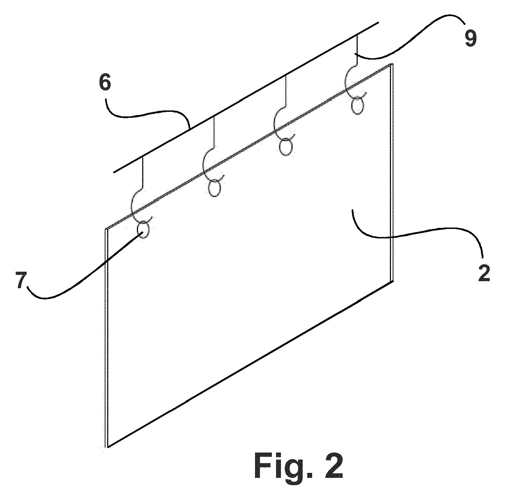

Die Aufhängung 5 kann als Rechen 6 ausgebildet sein. Ein solcher Rechen 6 mit daran angeordneter Glasscheibe 2 ist in Fig. 2 gezeigt. Ist ein Rechen 6 als Aufhängung 5 vorgesehen, so sind Zinken oder Haken 9 des Rechens 6 in Löcher 7 der Glasscheibe 2 einführbar. Der Rechen 6 ist so ausgebildet, dass dieser bzw. dessen Haken 9 in Löcher 6 der Glasscheibe 2 einführbar ist, um die Glasscheibe 2 zum Härten in das Becken 3 zu hängen. Eine Anzahl von Zinken oder Haken 9 des Rechens 6 entspricht mit Vorteil den Löchern in der Glasscheibe 2, welche zweckmäßigerweise mit äquidistanten Abständen zueinander angeordnet und über eine gesamte Seite der Glasscheibe 2 verteilt sind.

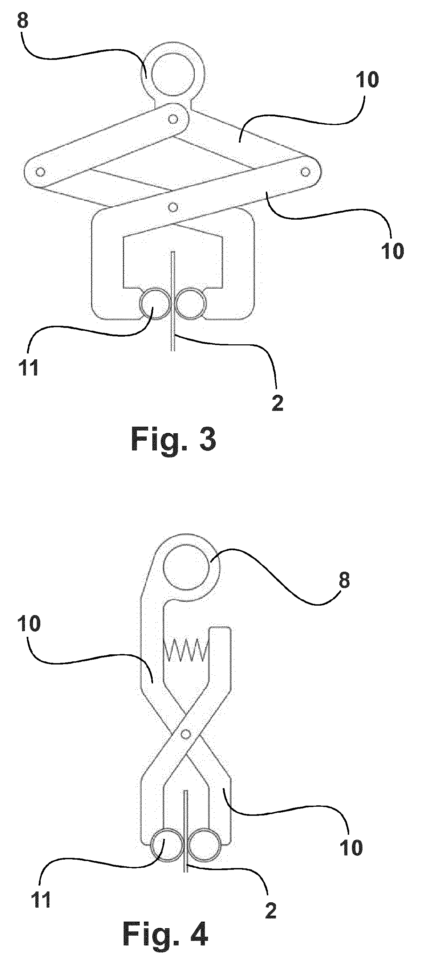

Eine als Klemmeinrichtung 8 ausgebildete Aufhängung 5 ist in Fig. 3 gezeigt und zum Einklemmen der zu bearbeitenden Glasscheibe 2 ausgebildet. Die Klemmeinrichtung 8 umfasst mehrere bewegbar zueinander bzw. gegeneinander gelagerte Arme 10, wobei zwischen zwei an den endseitigen Armen 10 angeordneten Klemmkörpern 11 die Glasscheibe 2 einklemmbar ist. Die Glasscheibe 2 ist mit der Klemmeinrichtung 8 entspannt oder elastisch in das Becken 3 mit der dem Salzbad 4 hängbar. Für eine elastische Aufhängung ist ein Element wie eine Feder vorgesehen, sodass die Glasscheibe 2 annähernd im Salzbad 4 lagerbar uns dadurch spannungsfrei und verzugsfrei härtbar ist. Die Glasscheibe 2 ist zum chemischen Härten hängend im Salzbad 4 gelagert. Eine weitere Klemmeinrichtung 8 ist in Fig. 4 gezeigt. Auch diese Klemmeinrichtung 8 umfasst zwei bewegbar zueinander bzw. gegeneinander gelagerte Arme 10 mit jeweils einem endseitig daran angeordneten Klemmkörper 11, um die Glasscheibe 2 zum Härten zwischen diesen einzuklemmen.

Bei einem erfindungsgemäßen Verfahren zum chemischen Härten einer großflächigen, dünnen Glasscheibe 2 in einem mit einem Salzbad 4 befüllten Becken 3 wird die Glasscheibe 2 von oben in das Becken 3 mit dem Salzbad eingebracht und dort zum chemischen Härten unter Reduktion der Schwerkraftwirkung gelagert. Das im Becken 3 eingebrachte Salzbad 4 wird im Becken 3 auf eine vorbestimmte Temperatur erwärmt. In weiterer Folge wird die Glasscheibe 2 durch das Salzbad 4 chemisch gehärtet bzw. vorgespannt. Das Salzbad 4 weist bevorzugt etwa eine der Glasscheibe 2 entsprechende Dichte auf, sodass die Glasscheibe 2 schwebend bzw. frei von Spannungen und Verzug im Becken 3 härtbar ist. Hierfür ist eine Aufhängung 5 vorgesehen, welche elastische Elemente wie Federn oder dergleichen umfasst.

## Patentansprüche

1. Vorrichtung (1) zum chemischen Vorspannen einer großflächigen, dünnen Glasscheibe (2), umfassend ein Becken (3) und ein Salzbad (4), wobei das Becken (3) mit dem Salzbad (4) befüllt ist und die Glasscheibe (2) zum Vorspannen in das Becken (3) einführbar ist, **dadurch gekennzeichnet, dass** eine Aufhängung (5) für die Glasscheibe (2) vorgesehen ist, um die Glasscheibe (2) zum Vorspannen im Becken (3) hängend zu lagern.

2. Vorrichtung (1) nach Anspruch 1, **dadurch gekennzeichnet, dass** die Aufhängung (5) als Rechen ausgebildet ist, wobei der Rechen (6) in Löcher (7) der Glasscheibe (2) einführbar ist.

3. Vorrichtung (1) nach Anspruch 1, **dadurch gekennzeichnet, dass** die Aufhängung (5) als Klemmeinrichtung (8) ausgebildet ist.

4. Vorrichtung (1) nach einem der Ansprüche 1 bis 3, **dadurch gekennzeichnet, dass** eine Dichte des Salzbades (4) an eine Dichte der Glasscheibe (2) angepasst ist, wobei das Salzbad (4) überwiegend Kaliumnitrat umfasst.

5. Vorrichtung (1) nach einem der Ansprüche 1 bis 4, **dadurch gekennzeichnet, dass** die Aufhängung (5) elastische Elemente aufweist, um die Glasscheibe (2) im Salzbad (4) annähernd schwebend zu lagern.

6. Verfahren zum chemischen Vorspannen einer großflächigen, dünnen Glasscheibe (2) in einem mit einem Salzbad (4) befüllten Becken (3), wobei die Glasscheibe (2) zum Vorspannen in das Becken (3) eingeführt wird, **dadurch gekennzeichnet, dass** die Glasscheibe (2) über eine Aufhängung (5) zum Vorspannen hängend im Becken (3) gelagert wird.

7. Verfahren nach Anspruch 6, **dadurch gekennzeichnet, dass** die Glasscheibe (2) über eine als Rechen (6) ausgebildete Aufhängung (5) in das Becken (3) gehängt wird, wobei der Rechen (6) in Löcher (7) der Glasscheibe (2) eingeführt wird.

8. Verfahren nach Anspruch 6, **dadurch gekennzeichnet, dass** die Glasscheibe (2) über eine als Klemmeinrichtung (8) ausgebildete Aufhängung (5) in das Becken (3) gehängt wird.

9. Verfahren nach einem der Ansprüche 6 bis 8, **dadurch gekennzeichnet, dass** eine Dichte des Salzbades (4) an eine Dichte der Glasscheibe (2) angepasst wird.

10. Verfahren nach einem der Ansprüche 6 bis 9, **dadurch gekennzeichnet, dass** die Glasscheibe (2) annähernd schwebend im Salzbad (4) gelagert wird.

11. Chemisch vorgespannte Glasscheibe (2), hergestellt mit einem Verfahren nach einem der Ansprüche 6 bis 10, wobei die Glasscheibe (2) großflächig und dünn ausgebildet ist.
